# DEMANDE DE BREVET EUROPEEN

(11) **EP 4 116 796 A1**
(43) Date de publication de la demande: **11.01.2023**
(21) Numéro de dépôt: 22181553.3
(22) Date de dépôt: 28.06.2022
(51) Int. Cl.: G05G 1/58, G05G 1/06, G05G 9/047, A01B 76/00

(54) **DISPOSITIF DE COMMANDE D'UNE OU PLUSIEURS FONCTION(S) DE TRAVAIL D'UNE MACHINE AGRICOLE ET MACHINE AGRICOLE MUNIE DUDIT DISPOSITIF DE COMMANDE**

(30) Priorité: 29.06.2021 FR 2106974
(71) Demandeur: Kuhn-Audureau SAS, 85260 La Copechagnière (FR)
(72) Inventeur: JAUNET, Christian, 85260 LA COPECHAGNIERE (FR); GAUTRON, Pascal, 85250 SAINT-FULGENT (FR)
(74) Mandataire: Esch, Esther Evelyne

(57) **Abrégé**

Dispositif de commande d'une ou plusieurs fonction(s) de travail d'une machine agricole et machine agricole munie dudit dispositif de commande.

La présente invention a pour objet un dispositif de commande d'une ou plusieurs fonction(s) de travail d'une machine agricole, ledit dispositif s'étendant le long d'un axe (X1) sensiblement vertical et comprenant une poignée (1) de commande, du type manche ou levier, s'étendant le long d'un axe (X2) de poignée et une embase (2), la poignée (1) étant délimitée longitudinalement par une extrémité inférieure et une extrémité supérieure (1b) entre lesquelles s'étend une partie principale de préhension (1c) de la poignée (1).

Il comprend en outre un système de maintien permettant de renforcer le maintien de la main (M) essentiellement contre la partie principale de préhension (1c) et comprenant deux surfaces d'appui (40a, 40b) superposées et écartées l'une de l'autre en s'étendant latéralement à l'extérieur de la partie principale de préhension (1c) de la poignée (1). Elle a également pour objet une machine agricole munie dudit dispositif de commande.

## Description

La présente invention concerne le domaine de la commande des machines, plus particulièrement du type machine agricole, et a pour objet un dispositif de commande d'une ou plusieurs fonction(s) de travail d'une telle machine agricole. Elle a également pour objet une telle machine agricole munie dudit dispositif de commande.

Lors de l'utilisation d'une machine agricole du type faucheuse débrousailleuse ou épareuse montée sur, attelée à, ou portée par, un tracteur, celui-ci circule au bord de la route pour couper/broyer la végétation (herbe, broussaille) au moyen d'un rotor disposé à l'extrémité d'un bras articulé.

L'utilisation d'une telle machine agricole, notamment sa commande, est rendue complexe par les différentes combinaisons de mouvement possibles du bras articulé. La commande est réalisée au moyen d'un dispositif de commande regroupant les différentes fonctions de commande et étant installé dans la cabine du tracteur à proximité du poste de conduite de sorte à pouvoir être actionné depuis ledit poste de conduite par l'opérateur.

Un tel dispositif de commande est connu, par exemple du document EP1818752. Ce dispositif de commande est réglable pour s'adapter à la configuration de la main de l'opérateur et notamment pour adapter la position d'organes d'interaction, tels que des boutons, molettes ou interrupteurs, par rapport à ses doigts (pouce, index). Il comprend une poignée formée par une embase fixée sur un organe inclinable et un ensemble principal dont la position est réglable par rapport à l'embase et un ensemble secondaire dont la position est réglable par rapport à l'embase ou au premier ensemble. Chaque ensemble porte au moins un organe d'interaction. L'embase présente une forme bombée adaptable à la forme de la paume de la main qui est placée en appui sur l'embase.

Toutefois, avec un dispositif de commande du type de celui divulgué par le document EP1818752, la manipulation de cette poignée se fait avec la paume de la main à plat (position plébiscitée par les ergonomes) sur l'embase, ce qui limite la zone de déplacement du pouce. Pour résoudre la limite de déplacement du pouce, il est prévu d'actionner d'autres fonctions à l'aide de l'index. Par ailleurs dans cette position à plat de la main, il est important que le poignet soit en position neutre (ni en extension, ni en compression) et, pour cela, il est recommandé de faire reposer l'avant-bras de l'opérateur (le chauffeur) sur un accoudoir, ce qui nécessite de régler la hauteur de l'accoudoir afin de privilégier une position où le poignet et l'avant-bras sont alignés.

La présente invention a pour but de pallier ces inconvénients.

La présente invention a pour objet un dispositif de commande d'une ou plusieurs fonction(s) de travail d'une machine agricole, ledit dispositif s'étendant le long d'un axe, dit axe longitudinal, sensiblement vertical et comprenant une poignée de commande, du type manche ou levier, s'étendant le long d'un axe, dit axe de poignée et étant apte et destinée à être actionnée par une seule main d'un opérateur de sorte à convertir une action manuelle sur la poignée en au moins un signal électrique permettant la commande d'une ou plusieurs fonction(s) de travail d'une telle machine agricole et une embase, la poignée étant délimitée longitudinalement par une extrémité inférieure et une extrémité supérieure entre lesquelles s'étend une partie principale de préhension de la poignée par la main, caractérisé en ce qu'il comprend en outre un système de maintien permettant de renforcer le maintien de la main, notamment de la paume de la main, essentiellement contre la partie principale de préhension de la poignée, ledit système de maintien comprenant deux surfaces d'appui superposées et écartées l'une de l'autre en s'étendant latéralement à l'extérieur de la partie principale de préhension de la poignée.

La présente invention a également pour objet une machine agricole munie d'au moins un dispositif de commande selon la présente invention.

L'invention sera mieux comprise, grâce à la description ci-après, qui se rapporte à un mode de réalisation préféré, donné à titre d'exemple non limitatif, et expliqué avec référence aux dessins schématiques annexés, dans lesquels :
[Fig. 1] représente une vue en perspective d'un dispositif de commande selon la présente invention, dans un mode de réalisation préférentiel,
[Fig. 2] est une vue en coupe longitudinale du dispositif de commande représenté sur la figure 1 et montre, en traits interrompus, la partie du système de maintien intégrant la surface d'appui inférieure déplacée dans une position rapprochant les deux surfaces d'appui l'une de l'autre,
[Fig. 3] montre le dispositif de commande représenté sur la figure 1 à l'état de préhension de la poignée par la main d'un opérateur,
[Fig. 4] montre le dispositif de commande représenté sur la figure 1, dans une forme de réalisation de la surface d'appui inférieure sans rebord de maintien latéral.

Les figures montrent un dispositif de commande d'une machine mobile, plus particulièrement une machine agricole. La machine agricole est par exemple une faucheuse débrousailleuse ou épareuse telle que décrite dans le document FR 3 050 955 A1. Une telle machine agricole, notamment du type faucheuse débroussailleuse, est destinée à être montée sur un tracteur ou véhicule analogue et plus particulièrement à être attelée à l'arrière dudit tracteur, notamment au niveau de son attelage trois points.

Le dispositif de commande, selon l'invention, est apte et destiné à commander une ou plusieurs fonction(s) de travail d'une telle machine agricole qui peut être attelée à, portée par ou montée sur un tracteur ou autre véhicule. Le dispositif s'étend le long d'un axe, dit axe X1 longitudinal ou vertical, sensiblement vertical et comprenant une poignée 1 de commande, du type manche ou levier, s'étendant le long d'un axe, dit axe X2 de poignée et étant apte et destinée à être actionnée par une seule main M d'un opérateur de sorte à convertir une action manuelle sur la poignée 1 en au moins un signal électrique permettant la commande d'une ou plusieurs fonction(s) de travail d'une telle machine et une embase 2. D'ordinaire, un tel dispositif de commande est installé dans la cabine du tracteur et s'étend plus précisément à côté du volant, sur le côté droit. Le dispositif de commande est alors logiquement actionné par la main droite de l'opérateur. Dans la suite de la description, lorsqu'on parlera de la main M de l'opérateur, il s'agira de sa main droite. La poignée 1 est délimitée longitudinalement par une extrémité inférieure 1a et une extrémité supérieure 1b entre lesquelles s'étend une partie principale de préhension 1c de la poignée 1 par la main M.

D'une manière particulière, l'axe sensiblement vertical passant par le centre de l'embase 2 correspond à l'axe X1 longitudinal du dispositif. En outre, la poignée 1 est articulée, par son extrémité inférieure 1a, sur ou dans l'embase 2, de préférence autour d'une liaison rotule, non représentée sur les figures. Une telle poignée 1 peut ainsi être du type connu sous le terme anglais et usuel « Joystick ». La partie haute ou supérieure de l'embase 2 peut comprendre un protecteur 2a, se présentant par exemple sous la forme d'une enveloppe de protection flexible ou d'un soufflet entourant un espace interne. La liaison rotule peut ainsi être logée dans ledit espace interne du protecteur 2a de l'embase 2. Le centre de la liaison rotule s'étend approximativement sur l'axe X1 longitudinal ou l'axe de de l'embase 2. Le centre de la liaison rotule est positionné préférentiellement au niveau de l'intersection de l'axe X1 longitudinal et de l'axe X2 de poignée.

Par « la poignée 1 est articulée, par son extrémité inférieure 1a, sur ou dans l'embase 2 autour d'une liaison rotule », on entend une poignée 1 inclinable autour d'une multitude d'orientation autour de l'axe X1 longitudinal.

Conformément à la présente invention, un tel dispositif comprend en outre un système de maintien 4 permettant de renforcer le maintien de la main M, notamment de la paume M3 de la main M, essentiellement contre la partie principale de préhension 1c de la poignée 1.

Toujours conformément à la présente invention, ledit système de maintien 4 comprend deux surfaces d'appui 40a, 40b superposées et écartées l'une de l'autre en s'étendant latéralement à l'extérieur de la partie principale de préhension 1c de la poignée 1.

De préférence, au moins une partie du système de maintien 4 est fixée, reliée à ou intégrée sur/dans la poignée 1, de préférence au niveau de l'extrémité inférieure ou supérieure 1a, 1b de cette dernière.

De préférence, une partie du système de maintien 4 comprenant l'une des surfaces d'appui 40a, 40b est fixée sur ou reliée à la poignée 1, de préférence au niveau de son extrémité inférieure 1a, au moyen d'une articulation pivot 3 d'axe de pivotement 3a. L'axe de pivotement 3a est sensiblement horizontal. L'axe de pivotement 3a est sensiblement perpendiculaire à l'axe X1 longitudinal de la poignée 1 et/ou sensiblement perpendiculaire à l'axe vertical passant par le centre de l'embase 2. L'articulation pivot 3 s'étend dans l'encombrement de la poignée 1, de préférence, elle est située proche de l'axe X1 longitudinal. De manière avantageuse, l'axe de pivotement 3a de l'articulation pivot 3 coupe l'axe X1 longitudinal ou l'axe vertical passant par le centre de l'embase 2.

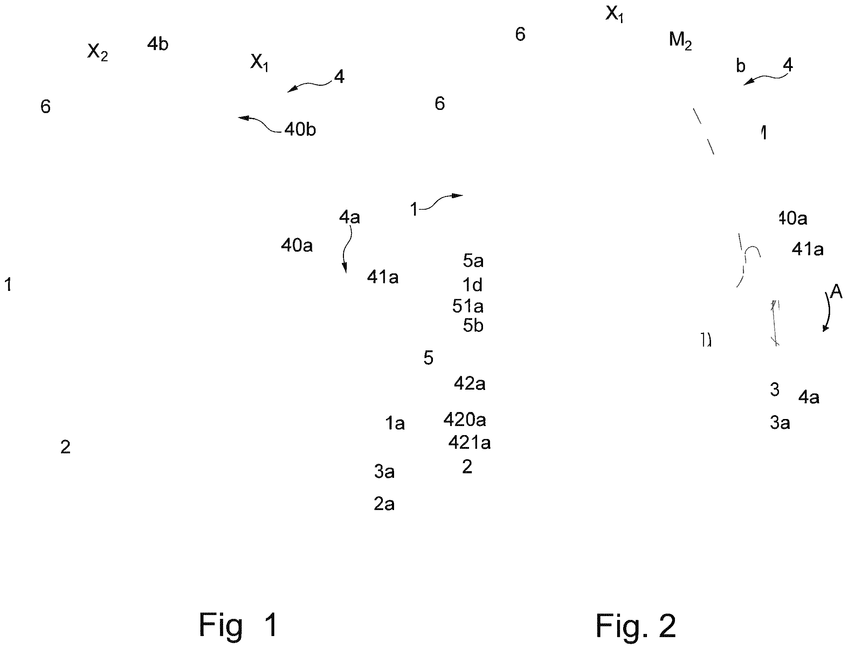

On comprend que, à l'état de préhension de poignée 1, la main M, notamment la paume M3 de la main M, s'étend sensiblement parallèlement à l'axe X2 de poignée (figure 2).

Sur les figures annexées 1, 2, 3 et 4, on peut voir que la position de repos de la poignée 1, c'est-à-dire sans actionnement de la poignée 1, correspond à une position de la poignée 1 où celle-ci (ou l'axe X2 de poignée) est incliné(e) par rapport à l'axe X1 longitudinal, de préférence entre 5 et 60 degrés, plus précisément entre 15 et 45 degrés. Dans une autre forme non représentée sur les figures annexées, la position de repos de la poignée 1 peut correspondre à une position de la poignée 1 (ou de l'axe X2 de poignée) sensiblement parallèle à l'axe X1 longitudinal, voire confondu avec ce dernier.

De préférence, les surfaces d'appui 40a, 40b s'étendent respectivement sensiblement au niveau de l'extrémité supérieure 1b et de l'extrémité inférieure 1a.

Les deux surfaces d'appui 40a, 40b superposées du système de maintien 4 consistent respectivement en une surface d'appui 40a inférieure et une surface d'appui 40b supérieure, de préférence réglables en écartement l'une par rapport à l'autre. Plus particulièrement, les deux surfaces d'appui 40a, 40b superposées du système de maintien 4 consistent respectivement en une surface d'appui 40a inférieure sur ou contre laquelle peut reposer ou venir en appui le tranchant externe M1 de la main M à l'état de préhension par cette dernière de la poignée 1 et une surface d'appui 40b supérieure, tournée vers la surface d'appui 4a inférieure, apte et destinée à bloquer un éventuel déplacement de la main M vers le haut venant en butée ou en appui, par son tranchant interne M2, contre ou sur la surface d'appui 40b supérieure.

Comme on peut le voir sur les figures 1, 2, 3 et 4 annexées, la surface d'appui 40a inférieure peut être située, de préférence, sensiblement au niveau de l'extrémité inférieure 1a de la poignée 1 et la surface d'appui 40b supérieure peut être située, de préférence, sensiblement au niveau de l'extrémité supérieure 1b de la poignée 1.

Chaque surface d'appui 40a, 40b forme ainsi une surface d'une partie du système de maintien 4 fixée sur, reliée à ou intégrée dans la poignée 1, le cas échant de manière articulée, c'est-à-dire préférentiellement de manière articulée au moyen d'une articulation pivot 3 d'axe de pivotement 3a. De préférence l'axe de pivotement 3a est sensiblement perpendiculaire à l'axe X1 longitudinal et/ou l'axe X2 de poignée. De préférence, la partie du système de maintien 4 fixée sur ou reliée à la poignée 1, de préférence au niveau de son extrémité inférieure 1a, au moyen d'une articulation pivot 3 d'axe de pivotement 3a, est la partie comprenant la surface d'appui 40a inférieure (figures 1, 2, 3, 4).

On entend par « tranchant externe M1 » de la main M, le côté de la main situé du côté de l'auriculaire et le « tranchant interne M2 » le côté opposé, c'est-à-dire le côté situé du côté du pouce de la main M.

De préférence, comme on peut le voir que les figures 1, 3 et 4, la surface d'appui 4a inférieure présente une forme allongée. La surface d'appui 4a est orientée essentiellement parallèlement à l'axe de pivotement 3a.

Dans une forme préférentielle, la surface d'appui 40a inférieure est concave, et préférentiellement allongée, avec une section sensiblement arrondie de sorte à présenter une forme sensiblement complémentaire ou adaptée à celle du tranchant externe M1 de la main M d'un opérateur.

Dans un mode de réalisation préférentiel du dispositif selon la présente invention, comme on peut le voir plus particulièrement sur la figure 2, celui-ci comprend en outre des moyens mécaniques de transmission et de réglage 5. Les moyens mécaniques de transmission et de réglage 5 s'étendent, par rapport à un plan vertical passant par l'articulation pivot (3), du côté opposé des surfaces d'appui (40a, 40b). Au moins une partie du système de maintien 4 s'étend d'un côté du plan vertical passant par l'axe de pivotement 3a de l'articulation pivot 3 et les moyens mécaniques de transmission et de réglage 5 s'étendent de l'autre côté de ce plan vertical. Tel que visible sur la figure 2, les moyens mécaniques de transmission et de réglage 5 sont situés à gauche du plan vertical et les deux surfaces d'appui 40a, 40b sont situées à droite du plan vertical passant par l'axe de pivotement 3a de l'articulation pivot 3. En outre, les deux surfaces d'appui 40a, 40b supérieure et inférieure sont réglables en écartement l'une par rapport à l'autre grâce auxdits ou à l'aide desdits moyens mécaniques de transmission et de réglage 5. Cette caractéristique du réglage en écartement permet d'adapter la poignée 1 à la main M de l'opérateur pour lui permettre d'être à l'aise au cours de l'exécution des travaux de la machine agricole. Cette disposition particulière de part et d'autre du plan vertical passant par l'articulation pivot 3 permet un réglage aisé, rapide et adapté à la paume M3 de la main M de l'opérateur. En effet avec la poignée 1 équipée du système de maintien 4 de l'invention, le réglage de l'écartement entre les surfaces d'appui 40a et 40b, c'est-à-dire l'adaptation du système de maintien 4 à la main M de l'opérateur, est réalisé sous l'effet de la main posée sur le système de maintien 4. Avec sa main M posée sur le système de maintien 4, l'opérateur constate directement si le réglage effectué est approprié ou non. L'opérateur pourra directement et au besoin adapter ou modifier le réglage au moyen de sa main gauche (non représentée sur les figures) durant l'utilisation du dispositif de commande. L'accès aux moyens mécaniques de transmission et de réglage 5 se fait directement, sans obstacle à contourner, par la main gauche. Le réglage est donc très pratique et facile. En effet, l'accès aux moyens mécaniques de transmission et de réglage 5 n'est pas caché ou obstrué par la main M posée sur le socle 4a mobile et prise entre la surface d'appui 40a inférieure et la surface d'appui 40b supérieure. Avec la main M posée sur le système de maintien 4, notamment sur la surface d'appui 4a, le réglage se fait facilement via les moyens mécaniques de transmission et de réglage 5 puisque les efforts sont équilibrés par rapport à l'axe de pivotement 3a de l'articulation pivot 3. Dans le cas particulier d'un dispositif de commande pour une faucheuse débroussailleuse, il pourra utiliser et commander les différentes fonctions de travail (orientation du rotor par rapport au sol, hauteur de coupe, déport du bras articulé, sortie du bras télescopique, ...) dans de bonnes conditions tout au long de la journée et surtout durant le déplacement du tracteur le long de la route. On remarque que dans la représentation de la figure 2, l'axe X1 longitudinal, sensiblement vertical, passe par ou coupe l'axe de pivotement 3a de l'articulation pivot 3. Le plan vertical passant par l'axe X1 longitudinal et donc confondu avec le plan vertical passant par l'axe de pivotement 3a. Les moyens mécaniques de transmission et de réglage 5 s'étendent d'un côté du plan vertical passant par l'axe X1 longitudinal alors que la surface d'appui 4a, notamment les deux surfaces d'appui 40a, 40b s'étendent de l'autre côté de ce plan vertical passant par l'axe X1 longitudinal.

De préférence, comme cela est représenté sur les figures 1, 2, 3 et 4, dans ce mode de réalisation préférentiel avec réglage de l'écartement entre les surfaces d'appui 40a 40b, la surface d'appui 4b supérieure est fixe par rapport à la poignée 1 (ou la partie principale de préhension 1c). Pour permettre le réglage de l'écartement entre les deux surfaces d'appui 40a, 40b, la surface d'appui 40a inférieure est alors mobile, grâce auxdits moyens mécaniques de transmission et de réglage 5, par rapport à la surface d'appui 4b supérieure fixe de sorte à pouvoir être rapprochée ou éloignée de cette dernière.

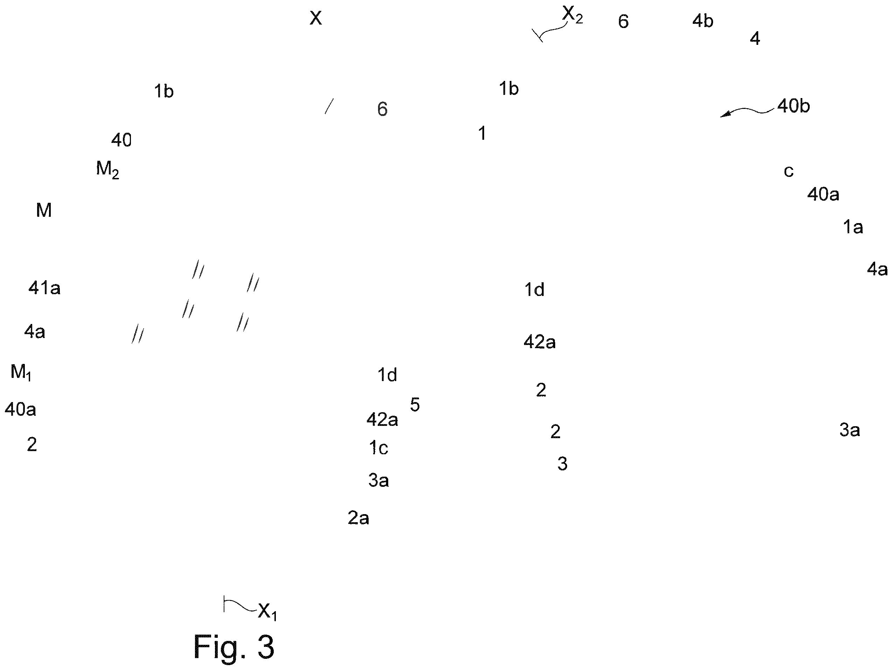

De préférence, comme on peut le voir notamment sur les figures 3 et 4, la surface d'appui 40a inférieure s'étend, selon au moins une direction, transversalement par rapport à l'axe X1 longitudinal et/ou l'axe X2 de poignée. Cette caractéristique a pour avantage de fournir une surface d'appui 40a inférieure pour le tranchant externe M1 de la main M. Dans le cas tel que représenté sur les figures 1, 2, 3 et 4 où la surface d'appui 40a inférieure est allongée, celle-ci s'étend longitudinalement, c'est à dire dans au moins sa direction longitudinale, transversalement par rapport à l'axe X1 longitudinal et/ou l'axe X2 de poignée. Cette surface d'appui 40a inférieure allongée permet une surface d'appui plus grande pour le tranchant externe M1 et donc un meilleur maintien de la main M.

Si on se réfère maintenant aux figures 1, 2 et 3, on peut voir que, dans un mode de réalisation préférentiel, la surface d'appui 4a inférieure se prolonge vers le haut, du côté opposé à la partie principale de préhension 1c de la poignée 1, par un rebord de maintien latéral 41a apte et destiné à empêcher le glissement du tranchant externe M1 de la main M, reposant sur la surface d'appui 40a inférieure, latéralement hors de cette dernière. Cette caractéristique a pour effet/avantage de d'empêcher la main M de glisser hors de la zone d'appui inférieure et de renforcer ainsi le maintien de la main M, notamment de la paume M3 de la main M, contre la poignée 1, plus particulièrement contre la partie principale 1c de la poignée 1.

De préférence, comme on peut le voir sur les figures 1, 2, 3 et 4, la surface d'appui 40b supérieure est intégrée dans la poignée 1, de préférence au niveau de son extrémité supérieure 1b, de préférence, comme on peut le voir sur les figures 1, 2, 3 et 4, dans une protubérance (ou excroissance) 4b formée dans l'extrémité supérieure 1b de la poignée 1 en s'étendant latéralement vers l'extérieur de cette dernière. Cette caractéristique a pour effet de fournir, directement à partir d'une partie de la poignée 1, c'est-à-dire une partie du système de maintien 4 intégrée dans la poignée 1 et intégrant la surface d'appui 40b supérieure, la fonction du maintien en hauteur pour la main M décrite plus haut, c'est-à-dire que la main M, notamment le tranchant interne M2 est maintenu contre la poignée 1. Ceci évite que la main M se soulève ou glisse vers le haut (par exemple au-delà de l'extrémité supérieure 1b, par exemple lorsque le tracteur passe sur une bosse.

Dans le mode de réalisation avec réglage de l'écartement entre les surfaces d'appui 40a 40b, la présente invention peut prévoir que le système de maintien 4 comprenne un socle 4a mobile intégrant la surface d'appui 40a inférieure. Les moyens mécaniques de transmission et de réglage 5 comprennent un mécanisme d'entraînement 5a, 5b, de préférence du type vis/écrou ou crémaillère, reliant fonctionnellement ledit socle 4a à la poignée 1 et étant configuré pour permettre l'entraînement en déplacement dudit socle 4a de sorte à rapprocher ou éloigner l'une de l'autre la surface d'appui 40a inférieure et la surface d'appui 40b supérieure en vue du réglage de leur écartement. De préférence, l'entraînement en déplacement du socle 4a est réalisé par un mouvement de pivotement dudit socle 4a autour d'un axe de pivotement 3a sensiblement perpendiculaire à l'axe X1 longitudinal et/ou à l'axe X2 de poignée (figures 1, 2, 3, 4). A cet effet, le dispositif comprend au moins l'articulation pivot 3 reliant ledit socle 4a à la poignée 1 et permettant d'assurer ledit pivotement. Le socle 4a forme ainsi la partie du système de maintien 4 fixée ou reliée à la poignée 1, de préférence au niveau de son extrémité inférieure 1, au moyen de l'articulation pivot 3 d'axe de pivotement 3a, telle que mentionnée plus haut.

De préférence, la poignée 1 comprend un premier site de réception 1d, par exemple formé par une protubérance (ou excroissance) de la poignée 1, et le socle 4a comprend un deuxième site de réception 42a. Le mécanisme d'entraînement 5a, 5b étant logé fonctionnellement dans lesdits premier et deuxième sites de réception 1d, 42a.

Dans une forme de réalisation préférentielle, comme on peut le voir sur les figures 1 et 2, le mécanisme d'entraînement 5a, 5b est du type vis/écrou et comprend, d'une part, une vis 5a munie d'une tête 50a et d'une tige 51a et, d'autre part, un écrou 5b coopérant avec la tige 51a. L'écrou 5b est logé fixement dans le premier site de réception 1d et la tête 50a de la vis 5a est logée dans le deuxième site de réception 42a en état accessible de sorte à permettre la rotation de la vis 5a et son vissage dans l'écrou 5b. Le vissage de la vis 5a entraine une transformation du mouvement de rotation de la vis en un mouvement de translation assurant le déplacement du socle 4a en pivotement par rapport à la poignée 1. Plus particulièrement, le dévissage de la vis 5a de l'écrou 5b a pour effet d'entraîner un pivotement du socle 4 autour de l'axe de pivotement 3a (sens antihoraire A représenté sur la figure 2) entraînant un déplacement vers le haut de la surface d'appui 40a inférieure rapprochant cette dernière de la surface d'appui 40b supérieure. Par la suite, un vissage de la vis 5a dans l'écrou 5b entraîne un déplacement vers le haut de la vis 5a permettant de libérer le socle 4a qui n'est plus sous la contrainte de la vis 5a (en contact avec la tête 50a) et qui peut alors pivoter dans le sens inverse (sens horaire A') pour éloigner ou écarter la surface d'appui 40a inférieure de la surface d'appui 40b supérieure. Le pivotement du socle 4a dans le sens inverse A' peut être réalisé, par exemple, sous l'effet de la main M posée sur la surface d'appui 40a inférieure et exerçant alors une pression vers le bas sur la surface d'appui 40a inférieure entraînant le pivotement du socle 4a. Le mécanisme d'entraînement 5a, 5b s'étend à l'opposé du socle 4a mobile du système de maintien 4. Tel que visible sur la figure 2, le mécanisme d'entraînement 5a, 5b s'étend d'un côté du plan passant par l'axe X1 longitudinal et le socle 4a mobile de l'autre côté. En étant situé à gauche, du côté opposé de la main M, le mécanisme d'entraînement 5a, 5b est directement accessible pour effectuer le réglage par l'autre main de l'opérateur, notamment sa main gauche. La figure 2 illustre, en traits interrompus, le système de maintien 4 dans une position de pivotement rapprochant la surface d'appui inférieure 40a de la surface d'appui supérieure 40b. Ce réglage est privilégié pour un opérateur dont la main M est moins large (distance entre le tranchant externe M1 et le tranchant interne M2).

Plus particulièrement, le pivotement du socle 4a sous l'effet du dévissage de la vis 5a est réalisée par le déplacement vers le bas de la vis 5a et par le contact de sa tête 50a avec une paroi interne 420a du deuxième site de réception 42a, ce qui a pour effet d'exercer une poussée vers le bas sur le deuxième site de réception 42a et donc le pivotement du socle 4a autour de l'axe de pivotement 3a. La paroi interne 420a peut être traversée par une ouverture 421a permettant à un outil d'accéder à la tête 50a de la vis 5a pour son actionnement.

Le socle 4a peut présenter une partie de forme annulaire entourant la poignée 1, de préférence sensiblement au niveau de l'extrémité inférieure 1a de la poignée 1, et une partie latérale intégrant la surface d'appui 40a inférieure. La partie annulaire du socle 4a peut comprendre, du côté opposé à la partie latérale intégrant la surface d'appui 40a inférieure, le deuxième site de réception 42a (figure 2).

Si on se réfère aux figures 1, 2, 3 et 4, on peut voir que la poignée 1 comprend en outre au moins un bouton de commande 6 apte et destiné à être actionné ou manipulé par les différents doigts de la main M. De préférence, lorsque plusieurs boutons de commande 6 sont prévus, ces boutons de commande 6 sont disposés et répartis sur la poignée 1 de sorte qu'au moins deux boutons de commande 6 puissent être actionnés ou manipulés simultanément par différents doigts de la main M. Avantageusement, la présente invention peut prévoir jusqu'à quatre boutons de commande 6 pouvant être actionnés simultanément, par exemple avec le pouce, l'index, le majeur et l'annulaire de la main M. De préférence, les boutons de commande 6 peuvent être disposés dans l'extrémité supérieure 1b de la poignée 1, c'est-à-dire sur le dessus de la poignée 1, ce qui permet de maximiser la surface couverte par le pouce de la main M. Ainsi même en appuyant simultanément sur les différents boutons de commande 6 pour commander l'outil avec précision, la main M reste bien en place contre la poignée 1, plus particulièrement contre la partie principale de préhension 1c, et les différents doigts de la main M restent en contact avec les boutons de commande 6 respectifs (Fig. 3). Lorsque la main M est bien maintenue/bloquée contre la partie de préhension 1c et bien positionnée en hauteur, la manipulation/activation des boutons est facilité puisque les doigts de la main M sont maintenus en face des boutons. Un tel bouton de commande 6 pour ce type de dispositif de commande et peut se présenter sous des formes diverses, par exemple, rondes, sensiblement plate ou allongée.

Ainsi, un tel dispositif de commande permet de maintenir la main M, notamment la paume M3 de la main M, sensiblement verticalement ou légèrement inclinée par rapport à un plan vertical. Cette position permet à la main M d'être au repos dans une position naturelle et le maintien de la main M dans cette position, notamment en position de repose de la poignée 1, est moins fatigant pour l'opérateur. Cette position naturelle permet, le cas échéant, de multiplier les boutons de commande 6 et est totalement adaptée pour accomplir des fonctions multiples et complexes pour la commande d'une machine agricole du type faucheuse débroussailleuse et plus particulièrement pour la commande du bras articulé portant au moins un outil de travail tel qu'un rotor.

La figure 4 représente un dispositif de commande avec un système de maintien 4 dont la surface d'appui 40a est dépourvue de rebord de maintien latéral 41a. Le maintien de la paume M3 de la main M contre la partie principale de préhension 1c est assuré par le système de maintien 4 qui comprend les deux surfaces d'appui 40a et 40b superposées et écartées l'une de l'autre. Ces deux surfaces d'appui 40a, 40b constituent un maintien respectif pour le tranchant interne M2 et le tranchant externe M1 de la main M.

Un tel dispositif de commande peut équiper un tracteur ou un véhicule, un engin un camion tel qu'un camion utilitaire tout-terrain ou un engin motorisé universel. Ce dispositif de commande est présent dans la cabine ou poste de pilotage du tracteur. La poignée 1 est manipulée par la main droite de l'opérateur qui conduit simultanément le tracteur. La machine agricole est par exemple une faucheuse, un andaineur, une pailleuse, une machine de travail du sol combinée à un semoir, une presse ou tout autre machine disposant de plusieurs fonctions de travail à piloter au moyen d'un dispositif de commande selon l'invention. Selon une alternative, le dispositif de commande est prévu directement sur la machine agricole, ce qui serait le cas pour une pailleuse. Il est tout à fait possible qu'un dispositif de commande équipe une machine agricole telle qu'un chariot télescopique, une moissonneuse batteuse, une ensileuse, une arracheuse de betterave. Grâce au dispositif de commande selon l'invention, la main M de l'opérateur est soutenue/maintenue sur la poignée 1 aussi bien en statique qu'en dynamique lors du déplacement de la machine agricole.

La présente invention a également pour objet une machine agricole munie ou équipée d'un dispositif de commande selon la présente invention.

Une telle machine agricole peut être du type faucheuse débrousailleuse ou épareuse.

Dans une première forme, une telle machine agricole peut être montée sur, attelée à, ou portée par, un tracteur ou autre véhicule configuré à cet effet. Un tel tracteur ou véhicule peut être munie du dispositif de commande selon la présente invention, ledit dispositif de commande pouvant être installée fonctionnellement dans la cabine de pilotage/conduite du tracteur/véhicule.

Dans une autre forme, la machine agricole peut être autonome et comprendre une cabine de pilotage qui peut être munie/équipée du dispositif selon la présente invention.

Une telle machine agricole mobile, notamment du type débroussailleuse ou épareuse, peut comprendre, de manière connue, au moins un rotor disposé à l'extrémité d'un bras articulé et réalisant la ou au moins l'une des fonctions de travail de la machine. De préférence, le dispositif de commande est installé dans la cabine du véhicule ou du tracteur, à proximité du poste de conduite de sorte à pouvoir être actionné depuis ledit poste de conduite par l'opérateur/chauffeur.

Bien entendu, l'invention n'est pas limitée au mode de réalisation décrit et représenté aux dessins annexés. Des modifications restent possibles, notamment du point de vue de la constitution des divers éléments ou par substitution d'équivalents techniques, sans sortir pour autant du domaine de protection de l'invention.

## Revendications

1. Dispositif de commande d'une ou plusieurs fonction(s) de travail d'une machine agricole, ledit dispositif s'étendant le long d'un axe (X1), dit axe (X1) longitudinal, sensiblement vertical et comprenant une poignée (1) de commande, du type manche ou levier, s'étendant le long d'un axe (X2), dit axe (X2) de poignée et étant apte et destinée à être actionnée par une seule main (M) d'un opérateur de sorte à convertir une action manuelle sur la poignée (1) en au moins un signal électrique permettant la commande d'une ou plusieurs fonction(s) de travail d'une telle machine et une embase (2), la poignée (1) étant délimitée longitudinalement par une extrémité inférieure (1a) et une extrémité supérieure (1b) entre lesquelles s'étend une partie principale de préhension (1c) de la poignée (1) par la main (M), **caractérisé en ce qu'**il comprend en outre un système de maintien (4) permettant de renforcer le maintien de la main (M), notamment de la paume (M3) de la main (M), essentiellement contre la partie principale de préhension (1c) de la poignée (1), ledit système de maintien (4) comprenant deux surfaces d'appui (40a, 40b) superposées et écartées l'une de l'autre en s'étendant latéralement à l'extérieur de la partie principale de préhension (1c) de la poignée (1).

2. Dispositif de commande selon la revendication 1, **caractérisé en ce qu'**une partie du système de maintien (4) comprenant l'une des surfaces d'appui (40a, 40b) est fixée sur ou reliée à la poignée (1), de préférence au niveau de son extrémité inférieure (1a), au moyen d'une articulation pivot (3) d'axe de pivotement (3a).

3. Dispositif de commande selon la revendication 1 ou 2, **caractérisé en ce que** les deux surfaces d'appui (40a, 40b) du système de maintien (4) consistent respectivement en une surface d'appui (40a) inférieure sur ou contre laquelle peut reposer ou venir en appui le tranchant externe (M1) de la main (M) à l'état de préhension et une surface d'appui (40b) supérieure, tournée vers la surface d'appui (40a) inférieure, apte et destinée à bloquer un éventuel déplacement de la main (M) vers le haut venant en butée ou en appui, par son tranchant interne (M2), contre ou sur la surface d'appui (40b) supérieure.

4. Dispositif de commande selon la revendication 3, **caractérisé en ce que** la surface d'appui (40a) inférieure est concave avec une section sensiblement arrondie de sorte à présenter une forme sensiblement complémentaire ou adaptée à celle du tranchant externe (M1) de la main (M) d'un opérateur.

5. Dispositif de commande selon l'une quelconque des revendications 2 à 4, **caractérisé en ce qu'**il comprend en outre des moyens mécaniques de transmission et de réglage (5) s'étendent par rapport à un plan vertical passant par l'articulation pivot (3) du côté opposé des surfaces d'appui (40a, 40b).

6. Dispositif de commande selon la revendication 5, **caractérisé en ce que** la main (M) de l'opérateur est posée sur le système de maintien (4) lors de l'actionnement des moyens mécaniques de transmission et de réglage (5).

7. Dispositif de commande selon la revendication 5 ou 6 **caractérisé en ce que** les deux surfaces d'appui (40a, 40b) supérieure et inférieure sont réglables en écartement l'une par rapport à l'autre grâce auxdits moyens mécaniques de transmission et de réglage (5).

8. Dispositif de commande selon la revendication 7, **caractérisé en ce que** la surface d'appui (40b) supérieure est fixe par rapport à la poignée (1), tandis que la surface d'appui (40a) inférieure est mobile par rapport à la surface d'appui (40b) supérieure fixe.

9. Dispositif de commande selon l'une quelconque des revendications 3 à 8, **caractérisé en ce que** la surface d'appui (40a) inférieure s'étend, selon au moins une direction, transversalement par rapport à l'axe (X1) longitudinal et/ou l'axe (X2) de poignée.

10. Dispositif de commande selon l'une quelconque des revendications 3 à 9, **caractérisé en ce que** la surface d'appui (40a) inférieure se prolonge vers le haut, du côté opposé à la partie principale de préhension (1c) de la poignée (1), par un rebord de maintien latéral (41a) apte et destiné à empêcher le glissement du tranchant externe (M1) de la main (M), reposant sur la surface d'appui (40a) inférieure, latéralement hors de cette dernière.

11. Dispositif de commande selon l'une quelconque des revendications 3 à 10, **caractérisé en ce que** la surface d'appui (40b) supérieure est intégrée dans la poignée (1), de préférence au niveau de son extrémité supérieure (1b), de préférence dans une protubérance (4b) formée dans l'extrémité supérieure (1b) de la poignée (1) en s'étendant latéralement vers l'extérieur de cette dernière.

12. Dispositif de commande selon l'une quelconque des revendications 1 à 11, **caractérisé en ce que** le système de maintien 4 comprend un socle 4a mobile intégrant la surface d'appui 40a inférieure.

13. Dispositif de commande selon la revendication 12, **caractérisé en ce que** le socle 4a présente une partie de forme annulaire entourant la poignée 1.

14. Machine agricole **caractérisée en ce qu'**elle dispose d'un dispositif de commande selon l'une quelconque des revendications 1 à 13.
